# FASCICULE DE BREVET EUROPEEN

(11) **EP 2 165 905 B1**
(45) Date de publication et mention de la délivrance du brevet: **06.02.2013**
(21) Numéro de dépôt: 08105364.7
(22) Date de dépôt: 17.09.2008
(51) Int. Cl.: B61C 17/04, B60R 21/02

(54) **Dispositif de protection d'un occupant d'un véhicule**
Schutzvorrichtung für einen Fahrzeuginsassen
Vehicle occupant protection device

(43) Date de publication de la demande: 24.03.2010
(73) Titulaire: ALSTOM Transport SA, 93400 Saint Ouen (FR)
(72) Inventeur: Huss, Pierre, 67460 Souffelweyersheim (FR); Bourdet, Nicolas, 67350 Pfaffenhoffen (FR); Willinger, Rémy, 67350 Pfaffenhoffen (FR); Tijou, Fabien, 67500 Haguenau (FR)

(56) Documents cités:
- EP-A- 0 952 063
- EP-A- 1 350 662
- DE-A1- 2 725 577
- DE-A1- 4 137 926
- DE-A1- 10 040 248
- DE-A1- 19 956 894
- FR-A- 2 918 617
- US-A- 5 333 901

## Description

La présente invention concerne un dispositif de protection d'un occupant d'un véhicule en cas de choc. Plus précisément, l'invention porte sur un dispositif permettant de limiter les risques de blessures sur des zones sensibles du corps d'un occupant d'un véhicule.

En effet, les véhicules doivent satisfaire à des contraintes de plus en plus sévères en matière de sécurité passive pour la protection des occupants et pour limiter les risques de blessures de ceux-ci en cas de choc.

On appelle choc, une situation d'urgence lors de laquelle le véhicule est soumis à une forte décélération. Il s'agit, par exemple, d'une collision frontale ou latérale du véhicule contre un obstacle ou d'une forte décélération du véhicule commandée par le conducteur.

Un choc implique une forte décélération du véhicule dans la direction du choc.

Lors d'un choc frontal, la direction du choc est la direction longitudinale du véhicule, ou encore la direction du déplacement du véhicule.

Lors d'un choc latéral, la direction du choc est une direction formant un angle non nul avec la direction longitudinale du véhicule.

Du fait de la forte décélération subie par le véhicule dans la direction du choc, il résulte une projection d'un passager du véhicule dans la direction du choc, c'est à dire dans la direction de la décélération subie par le véhicule.

Si le véhicule comprend des équipements disposés sur le trajet dudit passager, lorsqu'il est propulsé dans la direction du choc, le passager vient se heurter à ces équipements. Un tel impact occasionne des blessures sur le passager. Les blessures sont d'autant plus importantes lorsqu'une zone sensible du passager vient se heurter à un équipement du véhicule.

Prenons l'exemple d'un conducteur 8, d'un véhicule ferroviaire 1.

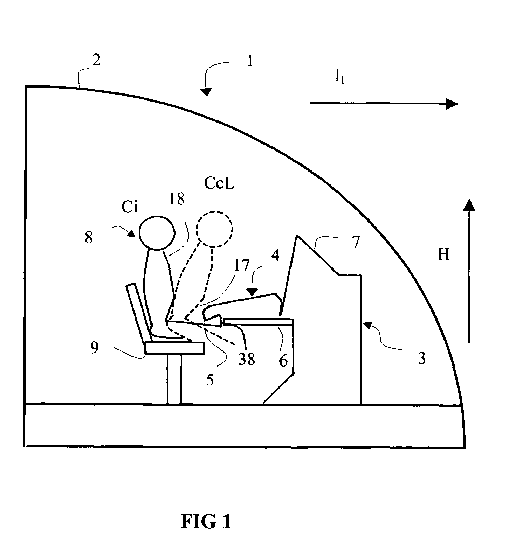

Sur la figure 1, on a illustré une cabine de conduite 2 d'un véhicule 1, non équipé d'un dispositif de protection selon l'invention. On a représenté par une flèche la direction longitudinale l₁ du véhicule 1.

Une cabine de conduite 2 classique est équipée d'un équipement 3, du type pupitre de conduite, comportant une partie supérieure 7, un socle 6 et une table de conduite 4 reposant sur un rebord 38. La table de conduite 4 comporte une face d'impact 5 qui fait saillie par rapport au support 38 et fait face au conducteur 8.

Le document EP 0 952 063 A1 montre une telle cabine de conduite.

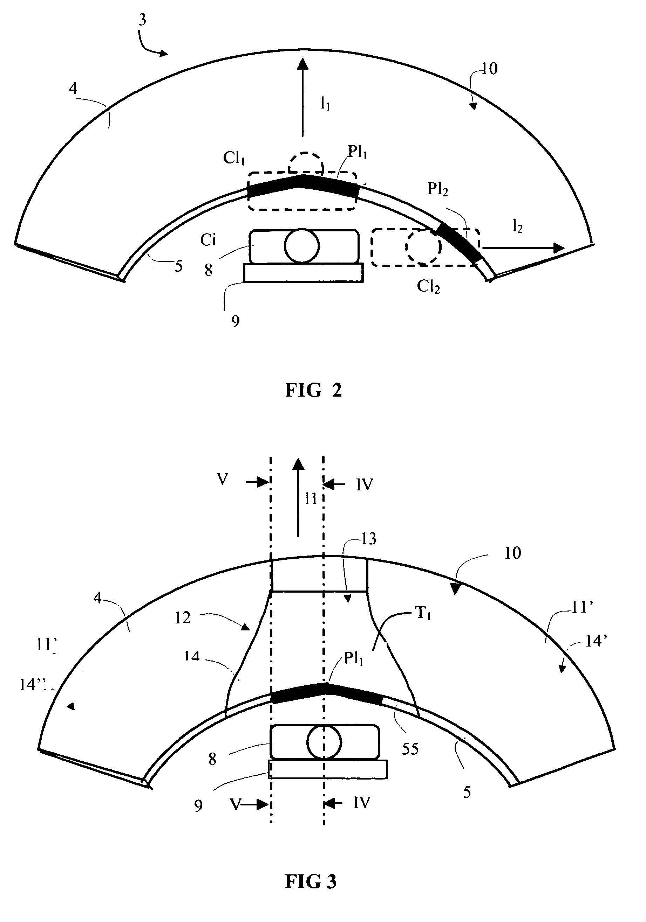

Un siège 9, apte à accueillir un conducteur 8, est disposé face au pupitre de conduite 3. Pour avoir une bonne ergonomie de conduite, le conducteur 8 se place classiquement, face au pupitre 3, de manière à ce que son abdomen 17 se trouve sensiblement à la même hauteur que la face d'impact 5 du pupitre de conduite 2. Son thorax 18 se trouve à une hauteur plus importante que la face d'impact 5. La position Ci du conducteur avant un choc, en situation normale de conduite, est représentée en traits pleins sur la figure 1 et la figure 2.

Lors d'un choc frontal, sous l'effet de la forte décélération subie par le véhicule 1 dans la direction l₁, le conducteur 8 est projeté vers l'avant du véhicule dans la direction longitudinale l₁ et vient se heurter au poste de conduite 3. Plus précisément, le conducteur 8 vient se heurter à la zone la plus proche du poste de conduite 3 dans la direction du choc, à savoir la face d'impact 5.

La position Cl₁ du conducteur 8, après un choc frontal, est représentée en traits pointillés sur la figure 1.

La figure 2 représente une vue de dessus, du pupitre de conduite 3. Pour plus de clarté on n'a pas représenté la partie supérieure 7 du pupitre de conduite 3. La table de conduite 4 est disposée face au conducteur 8, qui est représenté en position assise sur le siège 3.

La table de conduite 4, comprend un plan supérieur 10 en forme de croissant de lune et une face d'impact 5, s'étendant le long de la bordure, du plan supérieur 10, la plus proche de conducteur 8. La face d'impact 5 constitue un rebord de la table de conduite 4 faisant face au conducteur 8.

Sur la figure 2, on a représenté la position initiale Ci du conducteur, en situation normale de conduite, et la position Cl₁ du conducteur après un choc frontal.

La position finale Cl₂ représentée en traits pointillés sur la figure 2, représente la position du conducteur 8 après avoir été projeté, à partir de la position initiale Ci, dans la direction l₂, suite à un choc latéral de direction l₂.

Dans les deux positions Cl₁ et Cl₂, l'abdomen 17 du conducteur 8 est venu se heurter contre une portion d'impact Pl₁, et respectivement Pl₂, de la face d'impact 5 disposée en regard de l'abdomen 17 du conducteur 8. Les portions Pl₁ et Pl₂ sont représentées en traits épais sur la figure 2.

Par « en regard de l'abdomen 17 du conducteur », on entend que la portion d'impact Pl₁, respectivement Pl₂ de la face d'impact 5, occupe l'espace vers lequel est projeté l'abdomen 17 du conducteur lors du choc, dans la direction l₁, respectivement l₂.

L'abdomen 17 logeant les organes vitaux, est une zone sensible du corps du conducteur. En effet, l'abdomen 17 ne peut supporter une force supérieure à 2500 Newton sans être endommagé.

Un impact d'une telle zone sensible 17 contre les portions Pl₁ et Pl₂ de la face d'impact 5 du pupitre de conduite 3, peut provoquer des blessures importantes chez le conducteur 8.

Un but de l'invention est de réduire le risques de blessures sur les zones sensibles du corps d'un occupant d'un véhicule lors d'une situation d'urgence.

A cet effet, l'invention a pour objet un pupitre de conduite tel que défini dans la revendication 1.

Un avantage du dispositif de protection selon l'invention est d'éviter les blessures occasionnées, sur une zone sensible d'un occupant d'un véhicule, par un impact contre une portion d'impact d'un équipement dudit véhicule, ledit impact étant provoqué par un choc.

Selon d'autres modes de réalisation, le dispositif de protection possède une ou plusieurs des caractéristiques suivantes, prise(s) isolément ou selon toutes les combinaisons techniquement possibles :
- au moins une partie de l'espace initialement occupé par ladite portion d'impact est remplacée par un moyen d'absorption d'énergie lorsque la portion se trouve en position finale ;
- il comprend un dispositif d'amortissement de l'impact entre la portion d'impact et la zone moins sensible du conducteur ;
- il comprend un dispositif de limitation de la distance entre la position initiale et la position finale de la course de la portion d'impact ;
- le mouvement de la portion d'impact entre sa position initiale et sa position finale comprend au moins une composante perpendiculaire à la direction du choc ;

Un avantage du dispositif de protection selon l'invention est d'éviter les blessures occasionnées, sur une zone sensible d'un occupant d'un véhicule, par un impact contre une portion d'impact d'un équipement dudit véhicule, ledit impact étant provoqué par un choc.

Un autre avantage d'un mode de réalisation du dispositif de protection selon l'invention est de présenter une surface absorbante en énergie devant l'occupant, ce qui permet de répartir l'effort, s'exerçant sur le corps de l'occupant, en cas d'impact de l'occupant contre la portion d'impact. Ce mode de réalisation présente l'avantage de limiter les blessures occasionnées par un impact de l'occupant contre l'équipement.

Un autre avantage d'un mode de réalisation du dispositif de protection selon l'invention est de limiter les blessures occasionnées par un impact d'une zone moins sensible du corps d'un occupant contre une portion d'impact d'un équipement du véhicule.

L'invention a également pour objet un véhicule équipé d'un dispositif de protection selon l'invention.

L'invention a également pour objet un procédé de protection d'un passager d'un véhicule lors d'un choc, ledit véhicule comportant un équipement dont une portion mobile présente au moins une portion, étant disposée en regard d'une zone sensible du corps de l'occupant, ledit procédé comprenant les étapes suivantes :
- on détecte un choc,
- on active un moyen d'entraînement de ladite portion dudit équipement lors du choc,
- on déplace ladite portion mobile d'une position initiale vers une position finale de manière à ce que ladite portion d'impact, dans sa position finale, soit disposée en regard d'une zone moins sensible 1 dudit corps du passager.
   **caractérisé en ce que :**
   - ledit véhicule est un véhicule ferroviaire,
   - ledit occupant est le conducteur dudit véhicule ferroviaire,
   - ledit équipement est un pupitre de conduite dudit véhicule ferroviaire,
   - ladite portion est une portion d'une table de conduite du pupitre de conduite.

D'autres buts, caractéristiques et avantages de l'invention apparaîtront à la lecture de la description du mode de réalisation préféré du dispositif de protection d'un passager d'un véhicule en cas de choc, description faite en liaison avec les dessins dans lesquels:
- la figure 1, déjà commentée, illustre de façon schématique une vue de côté d'une cabine de conduite d'un véhicule ferroviaire.
- la figure 2, déjà commentée, illustre de façon schématique une vue de dessus d'un pupitre de conduite classique.
- la figure 3 représente schématiquement illustre de façon schématique une vue de dessus d'un pupitre de conduite équipé d'un dispositif de protection d'un occupant selon un mode de réalisation de l'invention.
- la figure 4 est une représentation schématique d'une coupe d'un dispositif de protection d'un occupant, selon un mode de réalisation de l'invention, dans une position initiale. La coupe est faite selon le plan IV-IV représenté sur la figure 3.
- la figure 5 est une représentation schématique d'une vue de gauche d'un dispositif de protection d'un occupant, selon un mode de réalisation de l'invention, dans une position finale. Le dispositif de protection est vue depuis la gauche face au plan V-V représenté sur la figure 3.

Dans la suite de la description, les termes, « longitudinal », « transversal », ainsi que les termes « dessus» et « dessous », s'entendent par référence à la direction longitudinale l₁ du véhicule illustrée par la flèche l₁, et respectivement, par référence à la direction verticale H orientée du bas vers le haut illustrée par la flèche H sur la figure 1.

Nous allons décrire précisément un dispositif de protection 12 d'un occupant 8 d'un véhicule 1 selon l'invention, destiné à limiter les dommages sur des zones sensibles du corps d'un occupant 8.

Dans la suite de la description, pour illustrer un mode de réalisation de l'invention, on décrira un dispositif de protection 12 d'un conducteur 8 d'un véhicule ferroviaire 1, destiné à limiter les dommages sur l'abdomen 17 du conducteur 8 lors d'un choc frontal.

Sur la figure 3, on a représenté schématiquement une vue de dessus d'un pupitre de conduite 3 équipé d'un dispositif de protection 12 d'un conducteur 8 d'un véhicule ferroviaire 1. Pour plus de clarté, on n'a pas représenté la partie supérieure 7 du pupitre de conduite 3.

Le pupitre de conduite 3 comprend une table de conduite 4, comprenant un plan supérieur 10 et une face d'impact 5.
Le dispositif de protection 12 du conducteur lors d'un choc frontal, comprend une portion T₁ de la table de conduite 4. La portion T₁ de la table est une portion mobile T₁ de la table 4.

La portion mobile T₁ de la table de conduite 4 est une portion de la table de conduite 4 qui comprend une face d'impact 55 incluant la portion d'impact Pl₁ vers laquelle l'abdomen 17 du conducteur 8 est projeté, lorsque conducteur 8 est projeté dans la direction du choc, à savoir la direction longitudinale l₁.

Ainsi, la table de conduite 4 comprend une portion de table mobile T₁, un rebord 13 auquel est fixée la portion mobile T₁, et deux portions latérales droite 11' et gauche 11" fixes. Les portions latérales droite 11' et gauche 11" de la table de conduite 4 sont reliées par l'intermédiaire de la portion mobile T₁.

Sur la figure 3, on a représenté le dispositif de protection 12 dans sa position initiale. Il s'agit de la position du dispositif de protection 12 en situation normale de conduite, lorsque le véhicule circule normalement sur la voie.

En position initiale, comme représenté sur la figure 3, la portion mobile T₁, le rebord 13, et les portions fixes 11' et 11" de la table de conduite 4 sont coplanaires, de manière à former un plan supérieur 10 et une face d'impact 5 similaires à ceux d'une table de conduite 4 non-équipée d'un dispositif de protection d'un conducteur 8, telle que représenté sur la figure 2.

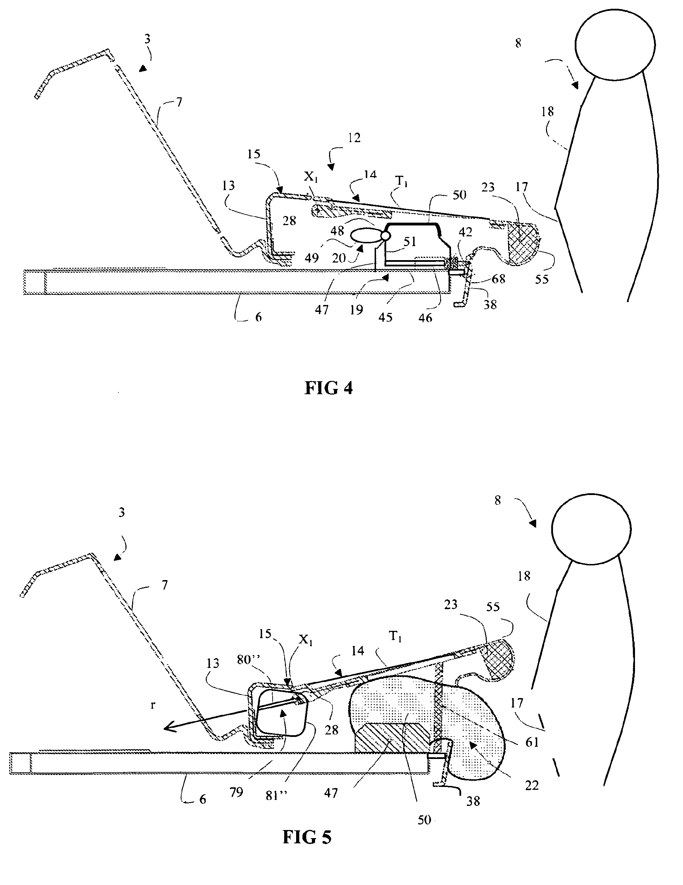

La Figure 4 est une représentation schématique d'une coupe du poste de conduite 3 et du dispositif de protection 12, selon l'invention. La coupe est effectuée selon le plan IV -IV de la figure 3.

Sur la figure 4, le dispositif de protection 12 est représenté dans sa position initiale.

Comme visible sur la figure 4, le rebord 13 est fixé à la partie supérieure 7 du pupitre de conduite 3.

La face supérieure 14 de la portion mobile T₁ de la table de conduite 4 est coplanaire avec la surface supérieure 15 du rebord 13 et les surfaces supérieures 14' et 14" des portions fixes 11' et 11" de la table de conduite 4.

La portion mobile T₁ comprend une face d'impact 55 s'étendant entre la surface supérieure 14 de la portion mobile T₁ et un rebord 38.

La portion d'impact Pl₁ est comprise dans la face d'impact 55.

La portion mobile T₁ est maintenue dans sa position initiale, au rebord 38 au moyen d'un moyen de maintien 42.

Le moyen de maintien 42, comme représenté sur la figure 4 est un ergot de blocage.

L'ergot de blocage traverse une gorge formée dans la face d'impact 55 et se poursuit jusqu'à un creux formé dans le rebord 38.

La portion mobile T₁ est fixée aux tables latérales droite 11' et gauche 11" au moyen d'un moyen de liaison 28.

Le moyen de liaison 28 est fixé sous la face supérieure 14 de la portion mobile T₁, et s'étend sur toute la largeur de la portion mobile T₁, dans la direction transversale, de manière à établir la liaison entre la table mobile T₁ et les tables latérale droite 11' et gauche 11".

La liaison de la portion mobile T₁ aux portions fixes 11' et 11" est une liaison de type rotule qui autorise une rotation de la portion mobile T₁ par rapport aux portions fixes autour d'un axe X₁, sensiblement horizontal et s'étendant dans la direction transversale du véhicule 1.

Le dispositif de protection 12, comprend un moyen de détection du choc 19 et un moyen de déplacement 20 de la portion mobile T₁.

Lors d'un choc, un moyen de déplacement 20 déplace la portion mobile T₁ du poste de conduite 3, de manière à ce que lorsque le conducteur 8 est projeté dans la direction du choc, sous l'effet d'une décélération important du véhicule 1, une zone de son corps plus résistante que son abdomen 17, à savoir son thorax 18, vienne heurter la portion Pl₁ de la face d'impact 55 qui est disposée face au conducteur 8.

Plus précisément, un moyen de détection du choc 19, détecte le choc. Le moyen de détection du choc active un moyen de déplacement 20 de la portion mobile T₁, de sa position initiale, représentée sur la figure 4, vers une position finale, représentée sur la figure 5, dans laquelle la face d'impact 55 comportant la portion Pl₁ est en regard du thorax 18 du conducteur 8.

L'espace occupé par la portion Pl₁ de la face d'impact 55, lorsque la portion mobile T₁ est en position initiale, est libéré lorsque la portion mobile T₁ est en position finale, de manière à ce que la partie fragile 17 du corps du conducteur 8 ne vienne pas heurter la portion Pl₁ de la face d'impact 55 lorsque le conducteur 8 est projeté dans la direction du choc, sous l'effet du choc.

Lorsque la portion mobile T₁ est en position finale, la portion d'impact Pl₁ de la face d'impact 55, est disposée en regard du thorax 18 du conducteur 8. Il en résulte que lorsque le conducteur 8 est projeté dans la direction l₁ du choc, sous l'effet de la décélération du véhicule, le thorax 18 du conducteur 8 vient heurter la portion d'impact Pl₁ de la face d'impact 55.

Avantageusement, le temps mis par la portion mobile pour se déplacer de sa initiale vers la position finale est inférieur au temps mis par le conducteur pour venir heurter la portion d'impact Pl₁ de la face d'impact 55.

Le dispositif de protection 12 selon l'invention, présente l'avantage de réduire les blessures sur les zones sensibles 17 de l'occupant.

En effet, lors d'un choc la zone sensible 17 du passager 8 ne vient pas heurter la portion Pl₁. Une zone moins sensible 18 vient heurter la portion Pl₁ et limite les blessures sur le passager 8 lors d'un choc. Le thorax 18 est une zone moins sensible que l'abdomen 17, il peut en effet supporter une force de 3000 N sans être endommagé.

De plus, le mouvement de la portion d'impact est un mouvement de rotation autour d'un axe X₁ perpendiculaire à la direction du choc. Le dispositif de protection présente donc l'avantage d'être peu encombrant dans la direction du choc.

On va maintenant décrire plus précisément le moyen de détection 19 du choc et le moyen de déplacement 20 de la portion mobile T₁.

Le moyen de détection du choc 19, comporte une tige métallique 45 disposée parallèlement à la direction du choc et un support 46 de la tige métallique 45.

Dans le cas d'un choc frontal, la direction du choc est la direction longitudinale l₁ du véhicule.

Le support 46 est logé dans une boite 47 qui est agencée sur un support 14. Le support 46 comprend une glissière de forme cylindrique dont l'axe est parallèle à la direction du choc et le diamètre est sensiblement identique à celui de la tige 45. La tige métallique 45 est propre à pénétrer dans la glissière 46. La tige métallique 45 est apte à glisser dans la glissière, dans la direction du choc.

Une première extrémité de la glissière 46 débouche à l'extérieur de la boite 47, face au rebord 38. Une seconde extrémité de la glissière 46 débouche à l'intérieur de la boite 47.

En situation normale de conduite, la tige 45 pénètre dans la glissière 46. Une première extrémité de la tige 45 fait saillie par rapport à la boite 47, en regard du rebord 38. La tige 45 est reliée à l'ergot de blocage 42 par l'intermédiaire d'un ressort 68.

Une seconde extrémité de la tige 45 débouche à l'intérieur de la boite 47. La seconde extrémité de la tige 45 est reliée au moyen d'un fil inextensible 51 à une goupille 48. La goupille 48 est propre à assembler de façon étanche la boite 47 à un moyen d'entrainement 49.

Le moyen d'entraînement 20 de la portion mobile T₁ de la table 4, comprend un sac gonflable 50 et moyen de gonflement 49 dudit sac gonflable 50.

Le moyen de gonflement 49 est une bonbonne comprenant de l'air comprimé, la bombonne étant fermée par la goupille 48.

Le sac gonflable 50 est fixé à la boite 47 de manière à fermer hermétiquement l'ouverture formée en partie supérieure de la boite 47. Le sac gonflable 50 est représenté en trait épais sur la figure 4, il est plié lorsque le dispositif de protection 12 est en position initiale.

On va maintenant expliquer plus précisément le fonctionnement du moyen de détection du choc 19 et d'entraînement 20 de la portion mobile T₁ de la table 4.

Lors d'un choc, le véhicule 1 subit une décélération importante dans la direction du choc.

La tige 45, étant en contact glissant avec la glissière 46, glisse dans la direction du choc. La situation d'urgence est alors détectée.

En variante, le moyen de détection 19 du choc est un dispositif de détection d'obstacle du type radar, ou caméra ou pyrotechnique comprenant un moyen de commande adapté pour activer un dispositif d'entraînement 20 et pour libérer la portion mobile 11.

Le dispositif de détection du choc 19, libère alors la portion mobile T₁ de sa position initiale.

En effet, le dispositif de maintien 42 de la portion mobile T₁ est solidaire de la tige 45. Lorsque la tige 45 est translatée dans la direction du choc, elle attire avec elle l'ergot de maintien 42 qui libère la portion mobile 11 du rebord 38 en sortant des gorges formées dans le rebord 38 et la face d'impact 55.

Le ressort 68 se comprime lorsque la tige 45 glisse dans la direction du choc. Le ressort 68 a pour fonction de ne pas transmettre le mouvement de la tige 45 à l'ergot de maintien 42 si l'amplitude du mouvement la tige 45 est inférieure à un seuil, en dessous duquel l'accélération du véhicule 1 est insuffisante pour que l'on considère que le véhicule subit un choc. La présence du ressort permet d'éviter la libération inopportune de la portion mobile T₁. Par exemple, dans le cas d'un véhicule ferroviaire, la portion mobile T₁ n'est libérée que pour une décélération du véhicule de plus de 20 m.s⁻² et plus particulièrement comprise entre 20 et 30 m.s⁻².

Lorsque le moyen de détection du choc 19 a détecté le choc, le moyen d'entraînement 20 est activé.

Plus précisément, lorsque la tige 45 glisse dans la direction du choc, elle tire sur le fil inextensible 51 qui dégoupille le moyen de gonflement 49 du sac gonflable 50.

Lorsque le moyen de gonflement 49 est dégoupillé, l'air comprimé s'échappe de la bonbonne d'air 49 dans le sac gonflable 50 et gonfle le sac gonflable 50. Le gonflement du sac gonflable 50 provoque le déplacement de la portion mobile T₁, de sa position initiale vers sa position finale comme représenté sur la figure 5.

Le gonflement du sac gonflable 50, pousse la portion mobile T₁ vers le haut ce qui provoque la rotation de la portion mobile T₁ autour de l'axe X₁.

De manière à limiter les dégâts subis par le conducteur 8 lorsqu'il est projeté dans la direction du choc et vient heurter la portion d'impact Pl₁ de la face d'impact 55, le sac gonflable 50 possède une forme telle et est initialement plié de manière à ce que lorsque le sac gonflable 50 se remplit d'air, il soulève la portion mobile T₁ et vient occuper l'espace occupé initialement par la portion d'impact Pl₁, comme visible sur la figure 5.

Le fait de déplacer la portion d'impact Pl₁ lors du choc, et de remplacer, en position finale, l'espace initialement occupé par la portion d'impact Pl₁, par une surface absorbante, présente l'avantage de réduire les risques de blessures sur l'abdomen 17 qui représente une zone sensible du conducteur 8.

De plus, ce mode de réalisation présente l'avantage de répartir les efforts exercés sur le conducteur 8, lorsque celui-ci vient se heurter au pupitre de conduite 3 sous l'effet du choc et donc de limiter les blessures sur le corps du conducteur 8 lors du choc. En effet, sous l'effet du choc, le thorax 18 du conducteur 8 vient heurter la portion d'impact Pl₁ du poste de conduite 3 et son abdomen 17 vient heurter l'airbag.

On notera que le moyen de gonflement 49 du sac gonflable 50 ainsi que les moyens de détection 19 et de maintien 42 n'ont pas été représentés sur la figure 5 pour plus de clarté. De plus, la boite 47 étant représentée en vue de côté depuis la gauche, on n'a représenté qu'une paroi latérale de celle ci sur la figure 5.

Un moyen de limitation de la course 22 comprend au moins une sangle 61 logée dans l'espace formé entre la portion mobile 11 et le socle 6. Une première extrémité de la sangle est fixée au socle 6 et une seconde extrémité de la sangle 61 est fixée à la table mobile 5 au-dessus de la première extrémité. Lorsque la portion mobile T₁ est en position initiale, la distance entre les deux extrémités de chaque sangle est inférieure à la longueur de la sangle, de manière à ce que la sangle 61 soit détendue.

Lors d'un choc, lorsque la portion mobile T₁ se soulève, la distance entre les deux extrémités de la sangle 61 augmente jusqu'à ce que la sangle 61 soit tendue. La portion mobile T₁ a alors atteint sa position finale.

On choisit la longueur de la sangle 61 de manière à ce que la distance verticale parcourue par la portion Pl₁, entre sa position initiale et sa position finale, est telle qu'elle se trouve en regard d'une zone moins sensible 18 du corps du conducteur 8 que la zone sensible 17 en regard de laquelle elle se trouvait en position initiale.

De préférence, le dispositif de limitation de course 22 comprend une seconde sangle espacée transversalement de la sangle 61.

Comme visible sur la figure 5, lorsque la portion mobile T₁ de la table 4 est retenue en position finale par le moyen de limitation de course 22, elle forme avec le socle 6, une surface d'appui rigide de grande taille pour le ballon gonflable 50 ce qui assure une bonne efficacité d'absorption de l'énergie d'un impact du conducteur 8 contre le ballon gonflable 50. ,

De plus, le sac gonflable 50 étant logé en position initiale, dans l'espace formé entre portion mobile T₁ et le support 6, on peut conserver sur la surface supérieure 14 de la portion mobile T₁ de la table 4, tous les équipements de conduite habituellement présents sur cette surface.

Avantageusement, le dispositif de protection de l'occupant 12 comprend un dispositif d'amortissement 79 adapté pour amortir les chocs entre le thorax 18 du conducteur 8 et la portion T₁.

Comme représenté sur la figure 5, le dispositif d'amortissement 79 comprend un canal 80" creusé au sein d'une cloison 81" séparant la portion latérale gauche 11" et la portion mobile 11 de la table 4.

La pièce d'attache 28 est fixé par une liaison rotule d'axe X₁ à la cloison 81".

Le canal 80' s'étend dans la direction r, parallèle à la surface supérieure 14 de la portion mobile 11 lorsqu'elle est en position finale.

Le canal 80" s'étend depuis le point de fixation de la pièce d'attache 28 à la cloison 81" dans la direction du choc. Le traçage du canal 80" dans la cloison 81" affaiblit la cloison 81" dans la direction de la décélération du véhicule 8.

Lors d'un choc, le thorax 18 de l'occupant 8 vient heurter la portion d'impact Pl₁. La pièce d'attache 28 déchire la cloison 81" le long du canal 80" d'affaiblissement formé au sein de la cloison 81".

Un canal similaire est formé dans une cloison séparant la portion mobile T₁ et la table latérale droite 11', de manière à ce que lorsque le thorax 18 du conducteur 8 heurte la face d'impact 12, la table mobile 5 est poussée uniformément dans la direction des deux canaux précités.

La profondeur du canal 80" est choisie de manière à ce que la pièce d'attache 28 présente une résistance suffisante pour que le choc entre le thorax 18 du conducteur 8 et la portion d'impact Pl₁, soit amorti lorsque la pièce de liaison 28 déchire la cloison 81'.

Le dispositif d'amortissement 79 présente l'avantage d'atténuer le choc entre le thorax 18 et la face d'impact 112 ce qui limite les dégâts induits par le choc sur le thorax 18 du conducteur.

En variante, le dispositif d'amortissement 79 est du type ressort ou matériau déformable. Tout type de dispositif permettant l'amortissement du choc du thorax 18 contre la portion Pl₁ peut être installé.

De préférence, la face d'impact 55 est garnie d'un matériau déformable plastiquement 23 de manière à ce qu'une partie de l'énergie du choc du thorax 18 du conducteur contre la portion d'impact Pl₁ soit absorbée par la déformation dudit matériau 23.

On a décrit un dispositif de protection 12 d'un occupant 8 d'un véhicule ferroviaire lorsque celui-ci subit un choc frontal mais ce qui a été décrit s'applique également à un choc latéral.

Dans le cas d'un choc latéral de direction lᵢ avec i= 2, 3, 4..., le dispositif de protection 12 comprend une portion mobile Tᵢ. La portion mobile Tᵢ est choisie de manière à ce qu'elle comprenne une portion d'impact Pli. La portion d'impact Plᵢ étant la portion du pupitre de conduite 3 vers laquelle est projeté le thorax 17 du conducteur 8 lorsqu'il est projeté dans la direction lᵢ du choc, sous l'effet de la décélération subie par le véhicule lors du choc.

Bien évidemment, le dispositif de protection 12 n'est pas un dispositif spécifique à la protection d'un conducteur d'un véhicule ferroviaire. Il peut être installé sur tout équipement 3 faisant face à un occupant 8 d'un véhicule, ledit équipement comportant une portion Plᵢ étant disposée en regard d'une zone sensible 17 de l'occupant dans la direction du choc lᵢ.

Le mouvement de la portion d'impact Plᵢ lors du choc, dans le mode de réalisation décrit, est un mouvement de rotation autour d'un axe X₁, perpendiculaire à la direction du choc. Bien entendu, le mouvement de la portion d'impact P lᵢ peut être remplacé par tout mouvement comprenant au moins une composante perpendiculaire à la direction du choc, de manière à limiter l'espace occupé par le dispositif dans la direction du choc tout en protégeant un occupant lors d'un choc. Il s'agit par exemple, d'un mouvement de translation verticale de la portion Tᵢ provoquant une translation de la portion d'impact Plᵢ.

En effet, l'espace est souvent limité dans les véhicules dans la direction du choc, il est avantageux de déplacer, lors d'un choc, une portion d'impact, pour l'éloigner d'une zone sensible d'un passager, dans une direction différente de celle du choc.

## Revendications

1. Pupitre de conduite de véhicule ferroviaire équipé d'un dispositif de protection (12) d'un occupant (8) dudit véhicule (1) lors d'un choc, ledit pupitre comprenant une table de conduite (4), **caractérisé en ce que**
- ladite table de conduite (4) comprend une portion mobile (Ti), un rebord (13) auquel est fixée ladite portion mobile, et deux portions latérales (11') reliées l'une à l'autre par l'intermédiaire de ladite portion mobile (Ti),
- ladite portion mobile (Ti) présente au moins une portion d'impact (Pli), et
- ledit pupitre comprend un moyen de détection (19) du choc et un moyen d'entraînement (20) de ladite portion mobile (Ti), de sorte que ladite portion mobile (Ti) est déplacée, lors d'un choc, d'une position initiale vers une position finale, afin d'éviter l'impact de ladite portion d'impact contre une zone sensible de l'occupant dudit véhicule.

2. Pupitre de conduite de véhicule ferroviaire selon la revendication 1, **caractérisé en ce qu'**au moins une partie de l'espace initialement occupé par la portion d'impact (Plᵢ) est remplacé par un moyen d'absorption d'énergie (50), lorsque la portion d'impact (Plᵢ), se trouve en position finale.

3. Pupitre de conduite de véhicule ferroviaire selon l'une des revendications précédentes, **caractérisé en ce qu'**il comprend un dispositif d'amortissement (79) de l'impact entre la portion d'impact (Plᵢ) et une zone moins sensible (18) du conducteur (8).

4. Pupitre de conduite de véhicule ferroviaire selon la revendication précédente, **caractérisé en ce que** le dispositif d'amortissement (79) est du type ressort ou matériau déformable.

5. Pupitre de conduite de véhicule ferroviaire selon la revendication 3, **caractérisé en ce que** le dispositif d'amortissement (79) comprend un canal d'affaiblissement(80') dans une cloison (81") séparant une portion latérale (11') de la portion mobile (Ti), une pièce d'attache (28) étant fixée par une liaison rotule à ladite cloison (81"), le canal s'étendant depuis le point de fixation de la pièce d'attache (28) à la cloison (81") dans une direction ( r) parallèle à la surface supérieure de la portion mobile (Ti) en position finale.

6. Pupitre de conduite de véhicule ferroviaire selon la revendication précédente, **caractérisé en ce que** le dispositif d'amortissement (79) comprend également un canal formé dans la paroi séparant l'autre portion latérale (11') de la portion mobile (Ti).

7. Pupitre de conduite de véhicule ferroviaire selon l'une des revendications précédentes, **caractérisé en ce qu'**il comprend un dispositif (22) de limitation de la distance entre la position initiale et la position finale de la course de la portion d'impact (Plᵢ).

8. Pupitre de conduite de véhicule ferroviaire selon l'une des revendications précédentes, **caractérisé en ce que** le mouvement de la portion d'impact (Plᵢ) entre sa position initiale et sa position finale comprend au moins une composante perpendiculaire à la direction du choc (lᵢ).

9. "Pupitre de conduite de véhicule ferroviaire selon l'une des revendications précédentes, **caractérisé en ce que** la face d'impact (55) de la portion mobile est garnie d'un matériau déformable plastiquement (23).

10. Véhicule ferroviaire équipé d'un pupitre de conduite de véhicule ferroviaire selon l'une des revendications précédentes.

11. Procédé de protection (12) d'un occupant (8) d'un véhicule (1) lors d'un choc, ledit véhicule (1 comportant un équipement (3) dont une portion mobile (Tᵢ) présente au moins une portion d'impact (Plᵢ) , étant disposée en regard d'une zone sensible (17) du corps de l'occupant, ledit procédé comprenant les étapes suivantes :
- on détecte un choc,
- on active un moyen d'entraînement (20) de ladite portion (11) dudit équipement (3) lors du choc,
- on déplace ladite portion mobile (Ti) d'une position initiale vers une position finale de manière à ce que ladite portion d'impact (Plᵢ), dans sa position finale, soit disposée en regard d'une zone moins sensible (18) dudit corps de l'occupant,
**caractérisé en ce que** :
- ledit véhicule (1) est un véhicule ferroviaire,
- ledit équipement (3) est un pupitre de conduite dudit véhicule ferroviaire
- ladite portion mobile (Tᵢ) est une portion d'une table de conduite (4 du pupitre de conduite du véhicule ferroviaire, ladite table de conduite comprenant ladite portion mobile (Tᵢ), un rebord (13) auquel est fixée ladite portion mobile et deux portions latérales (11') reliées l'une à l'autre par l'intermédiaire de la portion mobile (Ti).

## Claims

1. Rail vehicle driving console equipped with a device (12) for protecting an occupant (8) of said vehicle (1) in the event of an impact, said console comprising a driving table (4), **characterized in that**
- said driving table (4) comprises a movable portion (Ti), an edge (13) to which said movable portion is fixed, and two side portions (11') linked to one another via said movable portion (Ti),
- said movable portion (Ti) has at least one impact portion (Plᵢ), and
- said console comprises a means (19) for detecting the impact and a means (20) for driving said movable portion (Ti), so that said movable portion (Ti) is displaced, upon impact, from an initial position to a final position, in order to avoid the impact of said impact portion against a sensitive area of the occupant of said vehicle.

2. Rail vehicle driving console according to Claim 1, **characterized in that** at least a part of the space initially occupied by the impact portion (Plᵢ) is replaced by an energy absorption means (50), when the impact portion (Plᵢ) is in the final position.

3. Rail vehicle driving console according to one of the preceding claims, **characterized in that** it comprises a device (79) for damping the impact between the impact portion (Plᵢ) and a less sensitive area (18) of the driver (8).

4. Rail vehicle driving console according to the preceding claim, **characterized in that** the damping device (79) is of the spring or deformable material type.

5. Rail vehicle driving console according to Claim 3, **characterized in that** the damping device (79) comprises a weakening channel (80') in a partition (81") separating a side portion (11') from the movable portion (Ti), a fastening piece (28) being fixed by a trunnion link to said partition (81"), the channel extending from the point of fixing of the fastening piece (28) to the partition (81'') in a direction (r) parallel to the top surface of the movable portion (Ti) in the final position.

6. Rail vehicle driving console according to the preceding claim, **characterized in that** the damping device (79) also comprises a channel formed in the wall separating the other side portion (11') from the movable portion (Ti).

7. Rail vehicle driving console according to one of the preceding claims, **characterized in that** it comprises a device (22) for limiting the distance between the initial position and the final position of the travel of the impact portion (Plᵢ).

8. Rail vehicle driving console according to one of the preceding claims, **characterized in that** the movement of the impact portion (Plᵢ) between its initial position and its final position includes at least one component at right angles to the direction of impact (lᵢ).

9. Rail vehicle driving console according to one of the preceding claims, **characterized in that** the impact face (55) of the movable portion is clad with a plastically deformable material (23).

10. Rail vehicle equipped with a rail vehicle driving console according to one of the preceding claims.

11. Method (12) for protecting an occupant (8) of a vehicle (1) upon an impact, said vehicle (1) comprising equipment (3) of which a movable portion (Ti) has at least one impact portion (Plᵢ), being arranged facing a sensitive area (17) of the body of the occupant, said method comprising the following steps:
- an impact is detected,
- a means (20) for driving said portion (11) of said equipment (3) upon impact is activated,
- said movable portion (Ti) is displaced from an initial position to a final position in such a way that said impact portion (Plᵢ), in its final position, is arranged facing a less sensitive area (18) of said body of the occupant,
**characterized in that**:
- said vehicle (1) is a rail vehicle,
- said equipment (3) is a driving console of said rail vehicle,
- said movable portion (Ti) is a portion of a driving table (4) of the rail vehicle driving console, said driving table comprising said movable portion (Ti), an edge (13) to which said movable portion is fixed and two side portions (11') linked to one another via the movable portion (Ti).

## Patentansprüche

1. Fahrpult eines Schienenfahrzeugs, das mit einer Vorrichtung (12) zum Schutz eines Insassen (8) des Fahrzeugs (1) bei einem Stoß ausgestattet ist, wobei das Pult einen Fahrtisch (4) enthält, **dadurch gekennzeichnet, dass**
- der Fahrtisch (4) einen beweglichen Abschnitt (Ti), eine Randleiste (13), an der der bewegliche Abschnitt befestigt ist, und zwei Seitenabschnitte (11') enthält, die miteinander über den beweglichen Abschnitt (Tᵢ) verbunden sind,
- der bewegliche Abschnitt (Tᵢ) mindestens einen Aufprallabschnitt (Plᵢ) aufweist, und
- das Pult eine Erfassungseinrichtung (19) des Stoßes und eine Antriebseinrichtung (20) des beweglichen Abschnitts (Tᵢ) enthält, so dass der bewegliche Abschnitt (Tᵢ) bei einem Stoß von einer Anfangsstellung in eine Endstellung verschoben wird, um den Aufprall des Aufprallabschnitts gegen eine empfindliche Zone des Insassen des Fahrzeugs zu verhindern.

2. Fahrpult eines Schienenfahrzeugs nach Anspruch 1, **dadurch gekennzeichnet, dass** mindestens ein Teil des ursprünglich vom Aufprallabschnitt (Plᵢ) eingenommenen Raums durch eine Energieabsorptionseinrichtung (50) ersetzt wird, wenn der Aufprallabschnitt (Plᵢ) sich in der Endstellung befindet.

3. Fahrpult eines Schienenfahrzeugs nach einem der vorhergehenden Ansprüche, **dadurch gekennzeichnet, dass** sie eine Dämpfungsvorrichtung (79) des Aufpralls zwischen dem Aufprallabschnitt (Plᵢ) und einer weniger empfindlichen Zone (18) des Fahrers (8) enthält.

4. Fahrpult eines Schienenfahrzeugs nach dem vorhergehenden Anspruch, **dadurch gekennzeichnet, dass** die Dämpfungsvorrichtung (79) von der Art Feder oder verformbarem Material ist.

5. Fahrpult eines Schienenfahrzeugs nach Anspruch 3, **dadurch gekennzeichnet, dass** die Dämpfungsvorrichtung (79) einen Abschwächungskanal (80') in einer Trennwand (81") enthält, die einen Seitenabschnitt (11') vom beweglichen Abschnitt (Tᵢ) trennt, wobei ein Befestigungsbauteil (28) durch eine Kugelgelenkverbindung an der Trennwand (81") befestigt ist, wobei der Kanal sich vom Befestigungspunkt des Befestigungsbauteils (28) an der Trennwand (81") in eine Richtung (r) parallel zur Oberfläche des beweglichen Abschnitts (Tᵢ) in der Endstellung erstreckt.

6. Fahrpult eines Schienenfahrzeugs nach dem vorhergehenden Anspruch, **dadurch gekennzeichnet, dass** die Dämpfungsvorrichtung (79) ebenfalls einen Kanal enthält, der in der Wand geformt ist, die den anderen Seitenabschnitt (11') vom beweglichen Abschnitt (Tᵢ) trennt.

7. Fahrpult eines Schienenfahrzeugs nach einem der vorhergehenden Ansprüche, **dadurch gekennzeichnet, dass** es eine Vorrichtung (22) zur Begrenzung des Abstands zwischen der Anfangsstellung und der Endstellung des Hubs des Aufprallabschnitts (P1ᵢ) enthält.

8. Fahrpult eines Schienenfahrzeugs nach einem der vorhergehenden Ansprüche, **dadurch gekennzeichnet, dass** die Bewegung des Aufprallabschnitts (P1ᵢ) zwischen seiner Anfangsstellung und seiner Endstellung mindestens eine Komponente lotrecht zur Richtung des Stoßes (1ᵢ) enthält.

9. Fahrpult eines Schienenfahrzeugs nach einem der vorhergehenden Ansprüche, **dadurch gekennzeichnet, dass** die Aufprallseite (55) des beweglichen Abschnitts mit einem plastisch verformbaren Material (23) überzogen ist.

10. Schienenfahrzeug, das mit einem Fahrpult eines Schienenfahrzeugs nach einem der vorhergehenden Ansprüche ausgestattet ist.

11. Verfahren zum Schutz (12) eines Insassen (8) eines Fahrzeugs (1) bei einem Stoß, wobei das Fahrzeug (1) eine Ausrüstung (3) aufweist, von der ein beweglicher Abschnitt (Tᵢ) mindestens einen Aufprallabschnitt (P1ᵢ) aufweist, der gegenüber einer empfindlichen Zone (17) des Körpers des Insassen angeordnet ist, wobei das Verfahren die folgenden Schritte enthält:
- es wird ein Stoß erfasst,
- es wird eine Antriebseinrichtung (20) des Abschnitts (11) der Ausrüstung (3) bei dem Stoß aktiviert,
- der bewegliche Abschnitt (Tᵢ) wird von einer Anfangsstellung in eine Endstellung verschoben, damit der Aufprallabschnitt (P1ᵢ) in seiner Endstellung gegenüber einer weniger empfindlichen Zone (18) des Körpers des Insassen angeordnet ist,
**dadurch gekennzeichnet, dass**:
- das Fahrzeug (1) ein Schienenfahrzeug ist,
- die Ausrüstung (3) ein Fahrpult des Schienenfahrzeugs ist,
der bewegliche Abschnitt (Tᵢ) ein Abschnitt eines Fahrtischs (4) des Fahrpults des Schienenfahrzeugs ist, wobei der Fahrtisch den beweglichen Abschnitt (Tᵢ), eine Randleiste (13), an der der bewegliche Abschnitt befestigt ist, und zwei Seitenabschnitte (11') enthält, die über den beweglichen Abschnitt (Tᵢ) miteinander verbunden sind.
